(19) Europäisches Patentamt
European Patent Office
Office européen des brevets

(11) **EP 2 864 164 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**27.10.2021 Patentblatt 2021/43**

(45) Hinweis auf die Patenterteilung:
**08.08.2018 Patentblatt 2018/32**

(21) Anmeldenummer: **13730549.6**

(22) Anmeldetag: **19.06.2013**

(51) Int Cl.:
*B60T 8/172* (2006.01)     *B60T 8/1761* (2006.01)
*B60T 8/1755* (2006.01)

(86) Internationale Anmeldenummer:
**PCT/EP2013/062740**

(87) Internationale Veröffentlichungsnummer:
**WO 2013/189982 (27.12.2013 Gazette 2013/52)**

(54) **VERFAHREN ZUM BETREIBEN EINER RADSCHLUPFREGELUNGSVORRICHTUNG MIT KOMPENSIERTEN RADGESCHWINDIGKEITEN**

METHOD FOR OPERATING A WHEEL SLIP CONTROL APPARATUS WITH COMPENSATED WHEEL SPEEDS

PROCÉDÉ POUR FAIRE FONCTIONNER UN DISPOSITIF DE RÉGULATION DU GLISSEMENT DES ROUES AVEC DES VITESSES DE ROUE COMPENSÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2012 DE 102012012475**

(43) Veröffentlichungstag der Anmeldung:
**29.04.2015 Patentblatt 2015/18**

(73) Patentinhaber: **KNORR-BREMSE Systeme für Nutzfahrzeuge GmbH**
**80809 München (DE)**

(72) Erfinder: **VORREITER, Martin**
**71665 Vaihingen (DE)**

(74) Vertreter: **Maiwald Patent- und Rechtsanwaltsgesellschaft mbH**
**Grünstraße 25**
**40212 Düsseldorf (DE)**

(56) Entgegenhaltungen:
| | |
|---|---|
| EP-A1- 1 131 235 | EP-A2- 0 508 146 |
| EP-A2- 0 508 146 | EP-A2- 1 544 760 |
| DE-A1- 4 403 160 | DE-A1- 10 325 486 |
| DE-A1- 19 652 553 | DE-A1- 19 652 553 |
| DE-A1- 19 936 710 | DE-A1-102008 019 194 |
| US-A- 5 305 218 | US-A- 5 691 900 |
| US-A- 5 691 900 | US-A- 5 749 062 |
| US-A- 5 749 062 | |

EP 2 864 164 B2

**Beschreibung**

Die Erfindung betrifft ein Verfahren zum Betreiben einer Radschlupfregelungsvorrichtung eines Fahrzeugs gemäß dem Oberbegriff von Anspruch 1.

Ziel einer Radschlupfregelung wie ABS (Anti-Blockier-System) oder ASR (Antriebsschlupfregelung) ist, einen an Rädern auftretenden Brems- oder Antriebsschlupf auf einen optimalen Schlupf einzuregeln bzw. zu begrenzen. Ein optimaler Bremsschlupf beträgt beispielsweise 12%. Der Radschlupf wird durch Vergleich der Radgeschwindigkeit des betreffenden Rades mit einer zentralen Referenzgeschwindigkeit bestimmt. Der gemessene Radschlupf enthält außer der Komponente Längsschlupf als Bremsschlupf oder Antriebsschlupf, der im Rahmen von ABS oder ASR geregelt werden soll, auch eine Komponente, die beim Durchfahren einer Kurve entsteht, weil die kurvenäußeren Räder schneller als die kurveninneren Räder drehen. Dieser Kurvenschlupfanteil besteht in der Drehzahldifferenz zwischen den Rädern bei Kurvenfahrt und hängt von der Position der Räder am Fahrzeug (vorne/hinten; links/rechts), vom Kurvenradius, von der Fahrzeuggeometrie sowie von der Fahrzeuggeschwindigkeit ab. Das ABS bzw. ASR "weiß" in solchen Fällen aufgrund der ausschließlich von den Raddrehzahlsensoren stammenden Informationen nicht, ob die gemessene Drehzahldifferenz zwischen den Rädern von unterschiedlichen Reibwerten ($\mu$-split) an den Rädern oder von einer Kurvenfahrt herrührt. Um die Drehzahldifferenz zwischen den Rädern bei Kurvenfahrt im Rahmen einer Bremsschlupfregelung (ABS) zu kompensieren, wird gemäß dem Stand der Technik die Drehzahldifferenz zwischen den Rädern vor dem Bremsen beobachtet und bei der Bestimmung des Bremsschlupfs in gebremsten Situationen berücksichtigt. Eine solche Kompensation der Drehzahldifferenz zwischen den Rädern bei Kurvenfahrt im Rahmen von ABS wird beispielsweise in DE 42 01 675 C1 oder DE 195 22 634 A1 beschrieben.

In der gattungsgemäßen EP 1 544 760 A2 wird ein mit einem ESP-System zusammen arbeitendes Simulationsmodell für ein Fahrzeug beschrieben, welches eine Fahrt eines Fahrzeugs auf einer seitlich geneigten Fahrbahn abbildet. Hierbei wird in dreidimensionales Fahrbahnmodell auf ein zweidimensionales Fahrbahnmodell und Letzteres schließlich in ein eindimensionales Fahrbahnmodell konvertiert. Dabei werden eine korrigierte Gierrate sowie korrigierte Raddrehgeschwindigkeiten in ein Steuergerät des ESP-Systems eingesteuert. Die Korrektur der Gierrate erfolgt dabei in Abhängigkeit von einem Neigungswinkel der seitlich geneigten Fahrbahn.

Wenn sich der Kurvenradius während der Bremsung ändert, beispielsweise wenn der Fahrer bei bereits in Kurvenfahrt befindlichem Fahrzeug den Lenkwinkel ändert, so wird die Drehzahldifferenz zwischen den Rädern nicht mehr exakt kompensiert. Vor allem bei kleinen Bremsschlüpfen während einer ABS-Regelung kann der aus den Drehzahldifferenzen herrührende Fehler prozentual sehr groß werden.

Der Erfindung liegt demgegenüber die Aufgabe zugrunde, ein Verfahren der der eingangs erwähnten Art derart fortzubilden, dass die Radschlupfregelung möglichst exakt durchgeführt wird, insbesondere auch dann, wenn sich im Laufe einer Kurvenfahrt der Kurvenradius ändert.

Die Aufgabe wird erfindungsgemäß durch die Merkmale des Anspruchs 1 gelöst.

Offenbarung der Erfindung

Die Erfindung basiert auf dem Gedanken, dass aus den Daten von Sensoren, wie beispielsweise Lenkwinkelsensoren, Geschwindigkeitssensoren und Gierratensensoren, welche insbesondere ohnehin bei einer Fahrdynamikregelungsvorrichtung vorhanden sind, herangezogen werden, um den aktuell befahrenen Kurvenradius bezogen auf einen ausgewählten Punkt am Fahrzeug zu bestimmen. Der Kurvenradius variiert ganz allgemein in Längsrichtung des Fahrzeugs, da die Position des Momentanpols der Fahrzeugbewegung sich in der Verlängerung der Hinterachse befindet.

Unter Berücksichtigung des auf den gewählten Punkt bestimmten Kurvenradius lässt sich unter Berücksichtigung von Radstand und Spurbreite der befahrene Kurvenradius für jedes Einzelrad berechnen. Aus dem Vergleich der radbezogenen Kurvenradien untereinander lässt sich der kurvenfahrtbedingte Geschwindigkeitsanteil jedes Rades unabhängig von einem möglicherweise zusätzlich vorhandenen Längsschlupf in Form von Brems- oder Antriebsschlupf an dem betreffenden Rad bestimmen. Dadurch kann der Einfluss einer Kurvenfahrt auf eine Radschlupfregelung eliminiert werden, was die Regelungsqualität der Radschlupfregelung in vorteilhafter Weise steigert.

Hierzu wird ein Verfahren vorgeschlagen, bei dem Verfahren zum Betreiben einer Radschlupfregelungsvorrichtung eines Fahrzeugs, beinhaltend eine Bestimmung von hinsichtlich Raddrehzahlunterschieden bei Kurvenfahrt kompensierten Radgeschwindigkeiten von Rädern des Fahrzeugs als Eingangsgrößen für die Radschlupfregelungsvorrichtung, bei dem

   a) aus dem Fahrverhalten des Fahrzeugs während der Kurvenfahrt ein neutralsteuernder, untersteuernder oder übersteuernder Fahrzustand des Fahrzeugs ermittelt wird,
   b) abhängig von dem ermittelten neutralsteuernden, untersteuernden oder übersteuernden Fahrzustand des Fahrzeugs entweder die Referenz-Gierrate oder die Ist-Gierrate zur Berechnung eines auf einen gewählten Punkt am Fahrzeug bezogenen Kurvenradius herangezogen wird,

c) aus dem auf den gewählten Punkt bezogenen Kurvenradius radbezogene Kurvenradien für wenigstens einige der Räder des Fahrzeugs bestimmt werden,

d) Bezugsfaktoren aus den radbezogenen Kurvenradien und einem gemeinsamen Bezugs-Kurvenradius für die wenigstens einigen Räder des Fahrzeugs bestimmt werden, und

e) aus den Bezugsfaktoren und gemessenen Radgeschwindigkeiten für die wenigstens einigen Räder des Fahrzeugs die kompensierten Radgeschwindigkeiten bestimmt werden, und

f) für die wenigstens einigen Räder des Fahrzeugs die kompensierten Radgeschwindigkeiten als Eingangsgrößen für die Radschlupfregelungsvorrichtung herangezogen werden.

Die in Schritt e) ermittelten kompensierten Radgeschwindigkeiten sind bei nicht brems- oder antriebsschlupfenden Rädern im Wesentlichen gleich groß. Falls hingegen an einem oder an mehreren Rädern Brems- oder Antriebsschlupf auftritt, so unterscheiden sich die in Schritt e) ermittelten kompensierten Radgeschwindigkeiten der brems- oder antriebsschlupfenden Räder von den kompensierten Radgeschwindigkeiten der nicht brems- oder antriebsschlupfenden Räder charakteristisch, so dass an den solchermaßen, d.h. anhand der kompensierten Radgeschwindigkeiten identifizierten brems- oder antriebsschlupfenden Räder die Brems- oder Antriebsschlupfregelung aktiviert wird.

Da die Sensordaten, welche letztlich zur Bestimmung der kompensierten Radgeschwindigkeiten führen, von Sensoren wie Lenkwinkelsensor, Geschwindigkeitssensor und Gierratensensor stammen, also von Sensoren, wie sie ohnehin in Fahrdynamikregelungsvorrichtungen vorhanden sind, eignet sich das erfindungsgemäße Verfahren am besten zur Durchführung im Rahmen einer Fahrdynamikregelungsvorrichtung. Denn dann sind keine weiteren Sensoren notwendig.

Alternativ können solche Sensoren in Ermangelung einer Fahrdynamikregelung bei einer Radschlupfregelungsvorrichtung selbstverständlich auch zusätzlich vorgesehen werden.

Durch die in den Unteransprüchen aufgeführten Maßnahmen sind vorteilhafte Weiterbildungen und Verbesserungen der in Anspruch 1 angegebenen Erfindung möglich.

Besonders bevorzugt wird in Schritt b) bei

b1) ermitteltem neutralsteuernden Fahrzustand des Fahrzeugs entweder die Referenz-Gierrate oder die Ist-Gierrate,
b2) ermitteltem untersteuernden Fahrzustand des Fahrzeugs die Ist-Gierrate, und bei
b3) ermitteltem übersteuernden Fahrzustand des Fahrzeugs die Referenz-Gierrate

zur Berechnung des auf den gewählten Punkt bezogenen Kurvenradius herangezogen.

Bei neutralsteuerndem Fahrzustand sind der Verlauf und die Größe der beiden Kurvenradien an der Mitte der Hinterachse, welche auf der Basis der Referenz-Gierrate und der Ist-Gierrate berechnet werden, etwa identisch. Deshalb kann in diesem Fall entweder die Referenz-Gierrate und die Ist-Gierrate zur Berechnung des auf den gewählten Punkt bezogenen Kurvenradius herangezogen werden.

Bei über- oder untersteuerndem Fahrzeugverhalten stellt einer der Kurvenradien nicht den tatsächlich gefahrenen, sondern einen deutlich engeren Kurvenradius dar. Bei untersteuerndem Fahrzeugverhalten ist der aus dem Lenkwinkel bzw. der Referenzgierrate berechnete Kurvenradius kleiner als der tatsächlich befahrene Kurvenradius, weil das Fahrzeug der durch den Lenkwinkel bestimmten Vorgabe nicht folgen kann. Bei übersteuerndem Fahrzeugverhalten stellt die gemessene Gierrate eine Fahrzeugdrehung dar, die nicht aus dem Kurvenradius der befahrenen Kurve resultiert, sondern aus einer Schleuderbewegung. Da für eine Bremsschlupfregelung jeweils nur der Längsschlupf bzw. die Längsgeschwindigkeit an dem jeweiligen Rad relevant ist, müssen die durch Unter- bzw. Übersteuern verursachten Quergeschwindigkeitsanteile eliminiert werden. Dies geschieht, indem aus den beiden Kurvenradien, welche auf der Basis der Referenz-Gierrate und der Ist-Gierrate berechnet werden, derjenige ausgewählt wird, der den größeren Betrag hat und damit die weitere Kurve repräsentiert.

Somit wird in untersteuernden Fahrzuständen auf der Basis der tatsächlich gemessenen Gierrate der auf den gewählten Punkt bezogene Kurvenradius berechnet. In übersteuernden Fahrzuständen wird hingegen auf der Basis der Referenzgierrate der auf den gewählten Punkt bezogene Kurvenradius berechnet, mit welchem die Kurvenfahrt bis zur Instabilität des Fahrzeuges durchgeführt wird.

Weiterhin besonders bevorzugt wird als gewählter Punkt am Fahrzeug, auf welchen Kurvenradius bezogen ist, ein zwischen den Hinterrädern des Fahrzeugs auf einer Drehachse der Hinterräder angeordneter Mittelpunkt herangezogen. Dieser gewählte Punkt ist dann beispielsweise der auf der Hinterachse angeordnete Mittelpunkt der Hinterachse.

Gemäß einer Weiterbildung wird in obigem Schritt b) der auf den gewählten Punkt bezogene Kurvenradius als Verhältnis zwischen der gemessenen Fahrzeuggeschwindigkeit und dem Wert für die Gierrat berechnet.

Weiterhin werden in obigem Schritt c) bevorzugt die radbezogenen Kurvenradien für die wenigstens einigen Räder des Fahrzeugs aus dem auf den gewählten Punkt bezogenen Kurvenradius und dem Radstand sowie der Spurbreite des Fahrzeugs bestimmt.

Besonders bevorzugt ist in obigem Schritt d) der gemeinsame Bezugs-Kurvenradius der auf den gewählten Punkt bezogene Kurvenradius, also hier beispielsweise der Mittelpunkt der Hinterachse. Dann ergibt sich ein symmetrischer und radienunabhängiger Geschwindigkeitsverlauf der kompensierten Radgeschwindigkeiten.

Weiterhin bevorzugt werden in obigem Schritt d) die Bezugsfaktoren aus dem Verhältnis der radbezogenen Kurvenradien und dem gemeinsamen Bezugs-Kurvenradius bestimmt.

Gemäß einer Weiterbildung werden in obigem Schritt e) die kompensierten Radgeschwindigkeiten aus dem Verhältnis der gemessenen Radgeschwindigkeiten und den zugeordneten Bezugsfaktoren bestimmt.

Insbesondere ist die Fahrdynamikregelungsvorrichtung durch ein Steuergerät gekennzeichnet, in welchem ein Programm zur Durchführung des obigen Verfahrens gespeichert ist. In diesem Steuergerät sind dann insbesondere Werte für den Radstand und die Spurbreite des Fahrzeugs gespeichert, mit deren Hilfe und mit Hilfe des auf den gewählten Punkt bezogenen Kurvenradius in obigem Schritt c) die radbezogenen Kurvenradien für die wenigstens einigen Räder des Fahrzeugs berechnet werden.

Der genaue Ablauf des erfindungsgemäßen Verfahrens wird durch die nachfolgende Beschreibung eines Ausführungsbeispiels deutlich.

Zeichnung

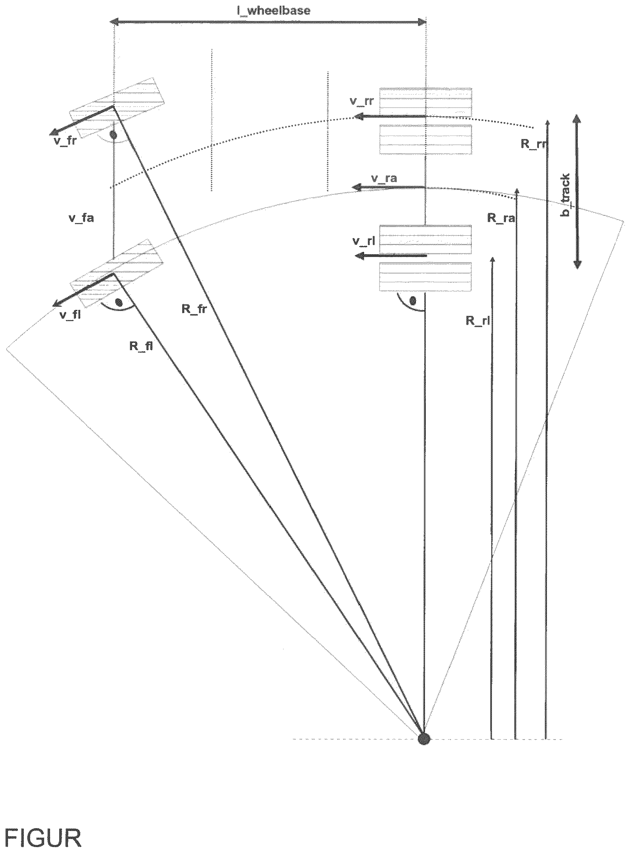

In der Zeichnung zeigt die einzige Figur eine schematische Draufsicht auf Räder eines Fahrzeugs bei Kurvenfahrt.

Beschreibung des Ausführungsbeispiels

Das erfindungsgemäße Verfahren wird im Rahmen einer Radschlupfregelung wie ABS (Anti-Blockier-System) oder ASR (Antriebsschlupfregelung) durchgeführt, welches einen an Rädern eines Fahrzeugs auftretenden Brems- und/oder Antriebsschlupf auf einen optimalen Schlupf einregelt bzw. zu begrenzt. Die Radschlupfregelung ist in eine Fahrdynamikregelung wie ESP (Elektronisches Stabilitätsprogramm) integriert.

Dem Steuergerät der Fahrdynamikregelung stehen als Sensorinformationen von einem Lenkwinkelsensor der Lenkwinkel $\delta$, von einer Gierratenerfassungseinrichtung eine Ist-Gierrate $\omega_{z\_meas}$ sowie von Radgeschwindigkeitssensoren die Fahrzeuggeschwindigkeit v zur Verfügung. Basierend auf dem Lenkwinkel $\delta$ und der Fahrzeuggeschwindigkeit v wird in dem Steuergerät der Fahrdynamikregelung auch eine Referenz-Gierrate $\omega_{z\_ref}$ berechnet, welche eine vom Fahrer gewünschte Soll-Gierrate darstellt.

Mit Hilfe des nachfolgend beschriebenen Verfahrens werden kompensierte Radgeschwindigkeiten für vorzugsweise sämtliche Fahrzeugräder berechnet, in denen der Einfluss der aufgrund einer Kurvenfahrt vorhandenen Drehzahlunterschiede der Fahrzeugräder eliminiert ist.

Gemäß eines ersten Verfahrensschritts wird auf der Basis der Referenz-Gierrate $\omega_{z\_ref}$ und auf der Basis der Ist-Gierrate $\omega_{z\_meas}$ jeweils ein Kurvenradius $R_{ra\_ref}$ bzw. $R_{ra\_meas}$ bezogen auf einen gewählten Punkt am Fahrzeug, hier beispielsweise bezogen auf die Mitte der Hinterachse nach der Beziehung R = v/ω berechnet:

$$R_{ra\_ref} = v / \omega_{z\_ref}$$
$$R_{ra\_meas} = v / \omega_{z\_meas} \qquad (1)$$

Bei stabiler Fahrt oder Neutralsteuern während der Kurvenfahrt sind der Verlauf und die Größe beider Kurvenradien $R_{ra\_ref}$ bzw. $R_{ra\_meas}$ hier beispielsweise an der Mitte der Hinterachse etwa identisch. Bei über- oder untersteuerndem Fahrzeugverhalten stellt jeweils ein Kurvenradius $R_{ra\_ref}$ oder $R_{ra\_meas}$ nicht den tatsächlich gefahrenen, sondern einen deutlich engeren Kurvenradius dar.

Beim Übersteuern fährt das Fahrzeug bekanntermaßen einen kleineren Kurvenradius als er dem Lenkeinschlag entspricht und beim Untersteuern einen größeren Kurvenradius. Neutralsteuern bedeutet indes, dass der gefahrene Kurvenradius in etwa dem Lenkeinschlag entspricht. Ermittelt bzw. unterschieden werden können diese Fahrzustände anhand fahrdynamischer Größen wie beispielsweise Lenkradwinkel, Wankwinkel und Schwimmwinkel, welche durch geeignete Sensoren aufgenommen werden.

Bei untersteuerndem Fahrzeugverhalten ist der aus dem Lenkwinkel $\delta$ bzw. der Referenzgierrate $\omega_{z\_ref}$ berechnete Kurvenradius $R_{ra\_ref}$ kleiner als der tatsächlich befahrene Kurvenradius, weil das Fahrzeug der durch den Lenkwinkel $\delta$ bestimmten Vorgabe nicht folgen kann. Bei übersteuerndem Fahrzeugverhalten stellt die gemessene Gierrate $\omega_{z\_meas}$ eine Fahrzeugdrehung dar, die nicht aus dem Kurvenradius der befahrenen Kurve resultiert, sondern aus einer Schleuderbewegung.

Da für eine Bremsschlupfregelung jeweils nur der Längsschlupf bzw. die Längsgeschwindigkeit an dem jeweiligen Rad relevant ist, müssen die durch Unter- bzw. Übersteuern verursachten Quergeschwindigkeitsanteile eliminiert werden. Dies geschieht, indem aus beiden Kurvenradien $R_{ra\_ref}$ bzw. $R_{ra\_meas}$ derjenige ausgewählt wird, der den größeren Betrag hat und damit die weitere Kurve repräsentiert.

Somit wird in untersteuernden Fahrzuständen auf der Basis der tatsächlich gemessenen Gierrate $\omega_{z\_meas}$ der Kurvenradius $R_{ra\_meas}$ hier beispielsweise an der Mitte der Hinterachse berechnet. In übersteuernden Fahrzuständen wird hingegen auf der Basis der Referenzgierrate $\omega_{z\_ref}$ der Kurvenradius $R_{ra\_ref}$ hier beispielsweise an der Mitte der Hinterachse berechnet, mit welchem die Kurvenfahrt bis zur Instabilität des Fahrzeuges durchgeführt wird. Bei stabiler Fahrt oder Neutralsteuern kann ein beliebiger Kurvenradius $R_{ra\_meas}$ oder $R_{ra\_ref}$ der beiden Kurvenradien hier beispielsweise an der Mitte der Hinterachse herangezogen werden.

Aus den im Speicher des Steuergeräts der Fahrdynamikregelung gespeicherten Größen Radstand $l\_wheelbase$ und Spurbreite $b\_track$ des Fahrzeugs werden gemäß einer weiteren Schritts basierend auf dem abhängig vom Fahrzustand (neutralsteuernd, übersteuernd, untersteuernd) ermittelten Kurvenradius $R_{ra\_ref}$ oder $R_{ra\_meas}$ hier beispielsweise an der Mitte der Hinterachse dann die Kurvenradien der einzelnen Räder des Fahrzeugs bestimmt werden.

Ausgehend von dem gemäß Gleichung (1) abhängig vom Fahrzustand (stabil, übersteuernd, untersteuernd) ermittelten Kurvenradius $R_{ra\_ref}$ oder $R_{ra\_meas}$ als Kurvenradius $R_{ra}$ an der Mitte der Hinterachse ergibt sich dann, wie die Figur veranschaulicht, für das rechte Rad (r) und das linke Rad (l) der Hinterachse des Fahrzeugs ein Kurvenradius $R_{r(l/r)}$:

$$R_{r(l/r)} = R_{ra} \pm \tfrac{1}{2} b\_track \qquad (2)$$

mit:

$R_{r(l/r)}$ = Kurvenradius für rechtes Rad (r) und linkes Rad (l) Hinterachse,
$R_{ra}$ = Kurvenradius an der Mitte der Hinterachse,
$b\_track$ = Spurbreite.

Für das rechte Rad (r) und das linke Rad (l) der Vorderachse (f) erhält man den Kurvenradius $R_{f(l/r)}$:

$$R_{f(l/r)} = \sqrt{\left(R_{r(l/r)}\right)^2 + l\_wheelbase^2} \qquad (3)$$

mit :

$R_{f(l/r)}$ = Kurvenradius für rechtes Rad (r) und linkes Rad (l) Vorderachse
$R_{r(l/r)}$ = Kurvenradius für rechtes Rad (r) und linkes Rad (l) Hinterachse,
$l\_wheelbase$ = Radstand.

Aus dem Vergleich dieser radbezogenen Kurvenradien $R_{f(l/r)}$ (Räder vorne) bzw. $R_{r(l/r)}$ (Räder hinten) untereinander lässt sich der kurvenfahrtbedingte Geschwindigkeitsanteil jedes Rades unabhängig von einem möglicherweise zusätzlich vorhandenen Bremsschlupf an dem betreffenden Rad bestimmen.

Um eine kurvenfahrtbereinigte Vergleichbarkeit der Radgeschwindigkeiten untereinander herzustellen, wird das Verhältnis der nach Gleichung (2) bzw. (3) berechneten radbezogenen Kurvenradien $R_{f(l/r)}$ (Räder vorne) bzw. $R_{r(l/r)}$ (Räder hinten) zu einem gemeinsamen Bezugs-Kurvenradius als Bezugsfaktor *kfl, kfr, krl, krr* dargestellt (siehe Gleichungen (4) bis (7) unten). Dieser gemeinsame Bezugs-Kurvenradius ist prinzipiell frei wählbar, es bietet sich jedoch der mittlere Hinterachsradius $R_{ra}$ an, da dann ein symmetrischer und radienunabhängiger Geschwindigkeitsverlauf der kompensierten Radgeschwindigkeiten entsteht.

Für die Bezugsfaktoren *kfl, kfr, krl, krr* als Verhältnis der radbezogenen Kurvenradien $R_{f(l/r)}$ (Räder vorne) bzw. $R_{r(l/r)}$ (Räder hinten) zu dem gemeinsamen Bezugs-Kurvenradius (mittlerer Hinterachskurvenradius $R_{ra}$) gilt dann:

$$kfl = \frac{R_{fl}}{R_{ra}} \qquad (4)$$

$$kfr = \frac{R_{fr}}{R_{ra}} \qquad (5)$$

$$krl = \frac{R_{rl}}{R_{ra}} \qquad (6)$$

$$krr = \frac{R_{rr}}{R_{ra}} \qquad (7)$$

Somit kann die Radgeschwindigkeitsinformation beispielsweise des linken Vorderrades auf die Mitte der Hinterachse projiziert werden, um eine hinsichtlich der Drehzahlunterschiede bei Kurvenfahrt kompensierte Radgeschwindigkeit zu erhalten, indem die gemessene Radgeschwindigkeit $v_{fl}$ des linken Vorderrades durch den diesem Rad zugeordneten Bezugsfaktor $k_{fl}$ dividiert wird.

$$v_{fl\_}c = v_{fl} / k_{fl} \qquad (8)$$

In analoger Weise, d.h. nach Gleichung (8) wird die kompensierte Radgeschwindigkeit $v_{fr\_}c$ am rechten Vorderrad, $v_{rl\_}c$ am linken Hinterrad und $v_{rr\_}c$ am rechten Hinterrad berechnet.

Aufgrund der Kompensation von kurvenfahrtbedingten Drehzahlunterschieden sind die solchermaßen ermittelten kompensierten Radgeschwindigkeiten $v_{fl\_}c$, $v_{fr\_}c$, $v_{rl\_}c$, $v_{rr\_}c$ für alle nicht brems- oder antriebsschlupfenden Rädern bei Kurvenfahrt im Wesentlichen gleich groß.

Falls hingegen an einem oder an mehreren Rädern Brems- oder Antriebsschlupf auftritt, so unterscheiden sich die ermittelten kompensierten Radgeschwindigkeiten $v_{fl\_}c$, $v_{fr\_}c$, $v_{rl\_}c$, $v_{rr\_}c$ der brems- oder antriebsschlupfenden Räder von den kompensierten Radgeschwindigkeiten der nicht brems- oder antriebsschlupfenden Räder charakteristisch, so dass an den solchermaßen, d.h. anhand der kompensierten Radgeschwindigkeiten $v_{fl\_}c$, $v_{fr\_}c$, $v_{rl\_}c$, $v_{rr\_}c$ identifizierten brems- oder antriebsschlupfenden Räder die Brems- oder Antriebsschlupfregelung aktiviert wird.

Abkürzungsverzeichnis :

| | |
|---|---|
| $v$ | Fahrzeuggeschwindigkeit |
| $\omega_{z\_ref}$ | Referenzgierrate |
| $\omega_{z\_meas}$ | Gemessene Gierrate |
| $R_{ra\_ref}$ | Kurvenradius an Mitte der Hinterachse, aus Referenzgierrate abgeleitet |
| $R_{ra\_meas}$ | Kurvenradius an Mitte der Hinterachse, aus gemessener Gierrate abgeleitet |
| l_wheelbase | Radstand |
| b_track | Spurbreite |
| $R_{ra}$ | Kurvenradius an der Mitte der Hinterachse |
| $R_{rl}$ | Kurvenradius am Rad hinten links |
| $R_{rr}$ | Kurvenradius am Rad hinten rechts |
| $R_{fl}$ | Kurvenradius am Rad vorne links |
| $R_{fr}$ | Kurvenradius am Rad vorne rechts |
| $v_{rl}$ | Radgeschwindigkeit hinten links |
| $v_{rr}$ | Radgeschwindigkeit hinten rechts |
| $v_{fl}$ | Radgeschwindigkeit vorne links |

(fortgesetzt)

| | |
|---|---|
| $v_{fr}$ | Radgeschwindigkeit vorne rechts |
| $v_{ra}$ | Geschwindigkeit an der Mitte der Hinterachse |
| $v_{fa}$ | Geschwindigkeit an der Mitte der Vorderachse |
| kfl | Bezugsfaktor für Rad vorne links |
| kfr | Bezugsfaktor für Rad vorne rechts |
| krl | Bezugsfaktor für Rad hinten links |
| krr | Bezugsfaktor für Rad hinten rechts |
| $v_{fl\_c}$ | kompensierte Radgeschwindigkeit vorne links |
| $v_{fr\_c}$ | kompensierte Radgeschwindigkeit vorne rechts |
| $v_{rr\_c}$ | kompensierte Radgeschwindigkeit hinten rechts |
| $v_{rl\_c}$ | kompensierte Radgeschwindigkeit hinten linkss |
| ABS | Anti-Blockier-System |
| ASR | Antriebsschlupfregelung |
| ESP | Elektronisches Stabilitätsprogramm |

**Patentansprüche**

1. Verfahren zum Betreiben einer Radschlupfregelungsvorrichtung eines Fahrzeugs, beinhaltend eine Bestimmung von hinsichtlich Raddrehzahlunterschieden bei einer Kurvenfahrt kompensierten Radgeschwindigkeiten ($v_{fl}$ c, $v_{fr}$ c, $v_{rr}$ c, $v_{rl\_c}$) von Rädern des Fahrzeugs als Eingangsgrößen für die Radschlupfregelungsvorrichtung, bei dem

   a) aus dem Fahrverhalten des Fahrzeugs während der Kurvenfahrt ein neutralsteuernder, untersteuernder oder übersteuernder Fahrzustand des Fahrzeugs ermittelt wird, **dadurch gekennzeichnet, dass**
   b) abhängig von dem ermittelten neutralsteuernden, untersteuernden oder übersteuernden Fahrzustand des Fahrzeugs entweder die Referenz-Gierrate ($\omega_{z\,ref}$) oder die Ist-Gierrate ($\omega_{z\,meas}$) für die zur Berechnung eines auf einen gewählten Punkt am Fahrzeug bezogenen Kurvenradius ($R_{ra\,ref}$ oder $R_{ra\,meas}$) herangezogen wird,
   c) aus dem auf den gewählten Punkt bezogenen Kurvenradius ($R_{ra\,ref}$ oder $R_{ra-meas}$) radbezogene Kurvenradien ($R_{rl}$, $R_{rr}$, $R_{fl}$, $R_{fr}$) für wenigstens einige der Räder des Fahrzeugs bestimmt werden,
   d) Bezugsfaktoren (*kfl, kfr, krl, krr*) aus den radbezogenen Kurvenradien ($R_{rl}$, $R_{rr}$, $R_{fl}$, $R_{fr}$) und einem gemeinsamen Bezugs-Kurvenradius ($R_{ra}$) für die wenigstens einigen Räder des Fahrzeugs bestimmt werden, und
   e) aus den Bezugsfaktoren (*kfl, kfr, krl, krr*) und gemessenen Radgeschwindigkeiten ($v_{rl}$, $v_{rr}$, $v_{fl}$, $v_{fr}$) für die wenigstens einigen Räder des Fahrzeugs jeweils die kompensierten Radgeschwindigkeiten ($v_{fl\_c}$, $v_{fr\_c}$, $v_{rr\_c}$, $v_{rl\_c}$) bestimmt werden, und
   f) für die wenigstens einigen Räder des Fahrzeugs die kompensierten Radgeschwindigkeiten ($v_{fl\_c}$, $v_{fr\_c}$, $v_{rr\_c}$, $v_{rl}$ c) als Eingangsgrößen für eine Radschlupfregelungsvorrichtung herangezogen werden.

2. Verfahren nach Anspruch 1, **dadurch gekennzeichnet, dass** in Schritt b) bei

   b1) ermitteltem neutralsteuernden Fahrzustand des Fahrzeugs entweder die Referenz-Gierrate ($\omega_{z\,ref}$) oder die Ist-Gierrate ($\omega_{z\,meas}$),
   b2) ermitteltem untersteuernden Fahrzustand des Fahrzeugs die Ist-Gierrate ($\omega_{z\,meas}$),
   b3) ermitteltem übersteuernden Fahrzustand des Fahrzeugs die Referenz-Gierrate ($\omega_{z\,ref}$)

   zur Berechnung des auf den gewählten Punkt des Fahrzeugs bezogenen Kurvenradius ($R_{ra-ref}$ oder $R_{ra-meas}$) herangezogen wird.

3. Verfahren nach Anspruch 1 oder 2, **dadurch gekennzeichnet, dass** als gewählter Punkt am Fahrzeug, aufweichen der Kurvenradius ($R_{ra\,ref}$ oder $R_{ra\,meas}$) bezogen ist, ein zwischen den Hinterrädern des Fahrzeugs auf einer Drehachse der Hinterräder angeordneter Mittelpunkt herangezogen wird.

EP 2 864 164 B2

4. Verfahren nach einem der vorhergehenden Ansprüche, **dadurch gekennzeichnet, dass** in Schritt b) der auf den gewählten Punkt bezogene Kurvenradius ($R_{ra\_ref}$ oder $R_{ra\_meas}$) als Verhältnis zwischen der gemessenen Fahrzeuggeschwindigkeit (v) und dem herangezogenen Wert für die Gierrate ($\omega_{z\,ref}$ oder $\omega_{z\_meas}$) berechnet wird.

5. Verfahren nach einem der vorhergehenden Ansprüche, **dadurch gekennzeichnet, dass** in Schritt c) radbezogene Kurvenradien ($R_{rl}$, $R_{rr}$, $R_{lr}$, $R_{ll}$) für die wenigstens einigen Räder des Fahrzeugs aus dem auf den gewählten Punkt bezogenen Kurvenradius ($R_{ra\,ref}$ oder $R_{ra\,meas}$) und dem Radstand (l wheelbase) sowie der Spurbreite (b track) des Fahrzeugs bestimmt werden.

6. Verfahren nach einem der vorhergehenden Ansprüche, **dadurch gekennzeichnet, dass** in Schritt d) der gemeinsame Bezugs-Kurvenradius ($R_{ra}$) der auf den gewählten Punkt bezogene Kurvenradius ($R_{ra\,ref}$ oder $R_{ra\_meas}$) ist.

7. Verfahren nach einem der vorhergehenden Ansprüche, **dadurch gekennzeichnet, dass** in Schritt d) die Bezugsfaktoren *(kfl, kfr, krl, krr)* aus dem Verhältnis der radbezogenen Kurvenradien ($R_{rl}$, $R_{rr}$, $R_{lr}$, $R_{ll}$) und dem gemeinsamen Bezugs-Kurvenradius ($R_{ra}$) bestimmt werden.

8. Verfahren nach einem der vorhergehenden Ansprüche, **dadurch gekennzeichnet, dass** in Schritt e) die kompensierten Radgeschwindigkeiten ($v_{fl}$ c, $v_{fr\_c}$, $v_{rr}$ c, $v_{rl\_c}$) aus dem Verhältnis der gemessenen Radgeschwindigkeiten ($v_{rl}$, $v_{rr}$, $v_{fl}$, $v_{fr}$) und den zugeordneten Bezugsfaktoren *(kfl, kfr, krl, krr)* bestimmt werden.

**Claims**

1. Method for operating a wheel slip control apparatus of a vehicle, including the determination of wheel speeds ($v_{fl}$\_c, $v_{fr}$\_c, $v_{rl}$\_c, $v_{rr}$ c) of wheels of the vehicle compensated with respect to wheel speed differences during a turn as input variables for the wheel slip control apparatus, with which

a) a neutral steering, understeering or oversteering driving condition of the vehicle is determined from the driving behaviour of the vehicle during the turn, **characterized in that**
b) depending on the determined neutral steering, understeering or oversteering driving condition of the vehicle, either the reference yaw rate ($\omega_{z\,ref}$) or the actual yaw rate ($\omega_{z\,meas}$) is used for the calculation of a turn radius ($R_{ra\,ref}$ or $R_{ra\,meas}$) related to a selected point on the vehicle,
c) wheel-related turn radii ($R_{rl}$, $R_{rr}$, $R_{fl}$, $R_{fr}$) for at least some of the wheels of the vehicle are determined from the turn radius ($R_{ra\,ref}$ or $R_{ra\,meas}$) related to the selected point,
d) reference factors *(kfl, kfr, krl, krr)* are determined from the wheel-related turn radii ($R_{rl}$, $R_{rr}$, $R_{fl}$, $R_{fr}$) and a common reference turn radius ($R_{ra}$) for the at least some wheels of the vehicle, and
e) the compensated wheel speeds ($v_{fl}$\_c, $V_{fr}$\_c, $v_{rr}$\_c, $v_{rl}$ c) are each determined from the reference factors *(kfl, kfr, krl, krr)* and measured wheel speeds ($v_{rl}$, $v_{rr}$, $v_{fl}$, $v_{fr}$) for the at least some wheels of the vehicle, and
f) the compensated wheel speeds ($v_{fl}$\_c, $V_{fr}$\_c, $v_{rr}$\_c, $v_{rl}$ c) are used as input variables for a wheel slip control apparatus for the at least some wheels of the vehicle.

2. Method according to Claim 1, **characterized in that** in step b) in the case of

b1) a determined neutral steering driving condition of the vehicle, either the reference yaw rate ($\omega_{z\,ref}$) or the actual yaw rate ($\omega_{z\,meas}$),
b2) a determined understeering driving condition of the vehicle, the actual yaw rate ($\omega_{z\,meas}$),
b3) a determined oversteering driving condition of the vehicle, the reference yaw rate ($\omega_{z\,ref}$)

is used for the calculation of the turn radius ($R_{ra\,ref}$ or $R_{ra\,meas}$) related to the selected point of the vehicle.

3. Method according to Claim 1 or 2, **characterized in that** a central point located between the rear wheels of the vehicle on an axis of rotation of the rear wheels is used as the selected point on the vehicle to which the turn radius ($R_{ra\,ref}$ or $R_{ra\_meas}$) is related.

4. Method according to any one of the preceding claims, **characterized in that** the turn radius ($R_{ra\,ref}$ or $R_{ra\,meas}$) related to the selected point is calculated in step b) as the ratio between the measured speed of the vehicle (v) and the value used for the yaw rate ($\omega_{z\,ref}$ or $\omega_{z\,meas}$) .

8

5. Method according to any one of the preceding claims, **characterized in that** in step c) wheel-related turn radii ($R_{rl}$, $R_{rr}$, $R_{lr}$, $R_{ll}$) are determined for the at least some wheels of the vehicle from the turn radius ($R_{ra\,ref}$ or $R_{ra\,meas}$) related to the selected point and the wheelbase (l wheelbase), as well as the track width (b track) of the vehicle.

6. Method according to any one of the preceding claims, **characterized in that** in step d) the common reference turn radius ($R_{ra}$) is the turn radius ($R_{ra\,ref}$ or $R_{ra\,meas}$) related to the selected point.

7. Method according to any one of the preceding claims, **characterized in that** the reference factors (*kfl, kfr, krl, krr*) are determined in step d) from the ratio of the wheel-related turn radii ($R_{rl}$, $R_{rr}$, $R_{lr}$, $R_{ll}$) and the common reference turn radius ($R_{ra}$) .

8. Method according to any one of the preceding claims, **characterized in that** in step e) the compensated wheel speeds ($v_{fl}\_c$, $V_{fr}\_c$, $v_{rr}\_c$, $V_{rl}\_c$) are determined from the ratio of the measured wheel speeds ($v_{rl}$, $v_{rr}$, $v_{fl}$ $v_{fr}$) and the associated reference factors (*kfl, kfr, krl, krr).*

**Revendications**

1. Procédé pour faire fonctionner un dispositif de régulation du glissement des roues d'un véhicule, comportant une détermination de différences de vitesse ($V_{fl}$ C, $V_{fr}$ C, $V_{rr}$ C, $V_{rl}$ C) de rotation des roues du véhicule compensées dans un virage, comme grandeurs d'entrée dans le dispositif de régulation de glissement des roues, dans lequel

   a) à partir du comportement de marche du véhicule pendant le virage, on détermine un état de marche du véhicule, commandé de manière neutre, sous-commandé ou sur-commandé, **caractérisé en ce que**
   b) en fonction de l'état de marche déterminé, commandé de manière neutre, sous-commandé ou sur-commandé du véhicule, on tire parti, soit du taux ($\omega_{z\,ref}$) d'embardée de référence, soit du taux ($\omega_{z\,meas}$) d'embardée réel pour le calcul d'un rayon ($R_{ra\,ref}$ ou $R_{ra\,meas}$) de courbure rapporté à un point sélectionné du véhicule,
   c) à partir du rayon ($R_{ra\,ref}$ ou $R_{ra\,meas}$) de courbure rapporté au point sélectionné, on détermine des rayons ($R_{rl}$, $R_{rr}$, $R_{fl}$, $R_{fr}$) de courbure rapportés aux roues pour au moins certaines des roues du véhicule,
   d) on détermine des facteurs *(kfl, kfr, krl, krr)* de correspondance à partir des rayons ($R_{rl}$, $R_{rr}$, $R_{fl}$, $R_{fr}$) de courbure rapportés aux roues et d'un rayon ($R_{ra}$) de courbure de correspondance commun pour les au moins certaines roues du véhicule et
   e) à partir des facteurs *(kfl, kfr, krl, krr)* de correspondance et de vitesses ($V_{rl}$, $v_{rr}$, $V_{fl}$, $v_{fr}$) mesurées des roues, pour les au moins certaines roues du véhicule, on détermine respectivement les vitesses ($V_{fl}$ C, $V_{fr}$ C, $V_{rr}$ C, $V_{rl}$ C) des roues compensées et
   f) pour les au moins certaines roues du véhicule, on tire parti des vitesses ($V_{fl}$ C, $V_{fr}$ C, $V_{rr}$ C, $V_{rl}$ C) de roues compensées comme grandeurs d'entrée pour un dispositif de régulation du glissement des roues.

2. Procédé suivant la revendication 1, **caractérisé en ce qu'**au stade b) on tire parti, pour le calcul du rayon ($R_{ra\,ref}$ ou $R_{ra\_meas}$) de courbure rapporté au point sélectionné du véhicule

   b1) si l'état de marche commandé de manière neutre du véhicule a été déterminé, soit du taux ($\omega_{z\,ref}$) d'embardée de référence, soit du taux ($\omega_{z\,meas}$) d'embardée réel,
   b2) si l'état de marche sous-commandé du véhicule a été déterminé, du taux ($\omega_{z\,meas}$) d'embardée réel,
   b3) si l'état de marche sur-commandé du véhicule a été déterminé, du taux ($\omega_{z\,ref}$) d'embardée de référence.

3. Procédé suivant la revendication 1 ou 2, **caractérisé en ce que**, comme point sélectionné du véhicule auquel est rapporté le rayon ($R_{ra\,ref}$ ou $R_{ra\,meas}$) de courbure, on tire parti d'un point médian disposé entre les roues arrières du véhicule sur un axe de rotation des roues arrières.

4. Procédé suivant l'une des revendications précédentes, **caractérisé en ce qu'**au stade b), on calcule le rayon ($R_{ra\,ref}$ ou $R_{ra\,meas}$) de courbure rapporté au point sélectionné en tant que rapport entre la vitesse (V) mesurée du véhicule et la valeur dont on a tiré parti pour le taux ($\omega_{z\_ref}$ ou $\omega_{z\,meas}$) d'embardée.

5. Procédé suivant l'une des revendications précédentes, **caractérisé en ce qu'**au stade c), on détermine des rayons ($R_{rl}$, $R_{rr}$, $R_{lr}$, $R_{ll}$) de courbure rapportés aux roues, pour les au moins certaines roues du véhicule, à partir du rayon ($R_{ra\,ref}$ ou $R_{ra\,meas}$) de courbure rapporté au point sélectionné et de l'empâtement (l_wheelbase) ainsi que de l'écartement des roues (b_track) du véhicule.

**6.** Procédé suivant l'une des revendications précédentes, **caractérisé en ce qu'**au stade d), le rayon ($R_{ra}$) de courbure de correspondance commun est le rayon ($R_{ra\ ref}$ ou $R_{ra\ meas}$) de courbure rapporté au point sélectionné.

**7.** Procédé suivant l'une des revendications précédentes, **caractérisé en ce qu'**au stade d), on détermine les facteurs *(kfl, kfr, krl, krr)* de correspondance à partir du rapport des rayons ($R_{rl}$, $R_{rr}$, $R_{lr}$, $R_{ll}$) de courbure rapportés aux roues et du rayon ($R_{ra}$) de courbure de référence commun.

**8.** Procédé suivant l'une des revendications précédentes, **caractérisé en ce qu'**au stade e), on détermine les vitesses ($V_{fl}$ C, $V_{fr}$ C, $V_{rr}$ C, $V_{rl}$ C) des roues à partir du rapport des vitesses ($V_{rl}$, $v_{rr}$, $V_{fl}$, $v_{fr}$) mesurées des roues et des facteurs *(kfl, kfr, krl, krr)* de correspondance associés.

FIGUR

**IN DER BESCHREIBUNG AUFGEFÜHRTE DOKUMENTE**

**In der Beschreibung aufgeführte Patentdokumente**

- DE 4201675 C1
- DE 19522634 A1

- EP 1544760 A2